# EUROPEAN PATENT APPLICATION

(11) **EP 4 806 530 A1**
(43) Date of publication of application: **16.09.2026**
(21) Application number: 23958068.1
(22) Date of filing: 14.11.2023
(51) Int. Cl.: A63F 13/98, A63F 13/24

(54) **PADDLE BUTTON ASSEMBLY AND GAMEPAD**

(30) Priority: 06.11.2023 CN 202322987959 U
(71) Applicant: Shenzhen Guli Technology Co., Ltd., Shenzhen, Guangdong 518000 (CN)
(72) Inventor: YU, Hongyong, Shenzhen, Guangdong 518000 (CN); HUANG, Jingzhuo, Shenzhen, Guangdong 518000 (CN)
(74) Representative: Metida
(86) International application number: PCT/CN2023/131576
(87) International publication number: WO 2025/097465

(57) **Abstract**

A paddle button assembly and a gamepad. The paddle button assembly comprises paddle buttons, mounts, and a circuit board; the mounts are engaged and fixed with the paddle buttons; the circuit board comprises a board body and trigger switches arranged on the board body; the board body abuts against the mounts; the paddle buttons are used for pressing to drive the mounts to rotate relative to the board body, so that the mounts abut against the trigger switches. The paddle buttons are engaged and fixed with the mounts, and the paddle buttons are used for pressing to drive the mounts to rotate relative to the board body, so that the mounts abut against the trigger switches, to generate a trigger signal. The mounts are engaged and fixed with the paddle buttons, thereby ensuring stable mounting of the paddle buttons, preventing easy wobbling of the paddle buttons on the mounts, and reducing the difficulty in machining and assembling parts; and the paddle buttons drive the mounts to abut against the trigger switches, thereby ensuring the flexibility of the paddle button operation.

## Description

### TECHNICAL FIELD

The present disclosure relates to the technical field of gamepads and, in particular, to a paddle button assembly and a gamepad.

### BACKGROUND

Gamepads, as common accessories of electronic game devices, allow users to control virtual characters by operating the components such as joysticks and buttons. As an extended accessory of a gamepad, a paddle button assembly can map multiple buttons on the back of the gamepad, providing more options for operators and thus improving operational flexibility.

In the related art, a paddle button assembly is mounted on a gamepad and includes paddle buttons, mounts and trigger switches. The paddle buttons are engaged with the mounts, and can rotate relative to the mounts to press against the trigger switches when pressed by an operator, thereby generating trigger signals. Since the paddle buttons are typically made of metal powder by injection molding and sintering, and the portions of the mounts engaged with the paddle buttons are typically made of other materials such as stainless steel, the two types of materials differ in shrinkage rate and hardness, making it difficult to control machining tolerances. In practice, it is different to guarantee that the paddle buttons are stably engaged with the mounts while rotating flexibly.

### SUMMARY

Embodiments of the present disclosure provide a paddle button assembly and a gamepad, so as to ensure the mounting stability and operation flexibility of paddle buttons.

A paddle button assembly includes:
paddle buttons;
mounts which are engaged with and fixed to the paddle buttons; and
a circuit board, including a board body and trigger switches arranged on the board body, where the board body abuts against the mounts; the paddle buttons are configured to be pressed to drive the mounts to rotate relative to the board body, so that the mounts press against the trigger switches.

In an embodiment, the paddle button assembly includes a support plate, the mounts are rotationally connected to the support plate, the board body is arranged on one side of the support plate and fixed relative to the support plate in position, and the paddle buttons protrude from the opposite other side of the support plate.

In an embodiment, the support plate is formed with through holes and is provided with bosses on a side facing the circuit board; the mounts are inserted in the through holes, and each boss is provided with a groove in rotational fit with the corresponding mount.

In an embodiment, the support plate is provided with limit ledges on the same side as the bosses and opposite to the bosses; each limit ledge is provided with at least two limit grooves which are spaced apart; each mount is provided with at least two protrusions, and the protrusions are inserted in the limit grooves in a one-to-one correspondence.

In an embodiment, the support plate is provided with two said through holes which are spaced apart; each through hole receives two said paddle buttons and two said mounts, and the two paddle buttons are connected to the two mounts in a one-to-one correspondence; the paddle button assembly includes a press plate and fasteners; the press plate covers the grooves and is fixedly connected to the support plate by means of the fasteners, and the board body covers the mounts and the press plate.

In an embodiment, each mount includes a bracket, a snap-fit member and a flexible body; the bracket and the snap-fit member are respectively connected to the flexible body; the bracket and the snap-fit member, together with the flexible body, form a clamping groove for clamping the corresponding paddle button, so that the paddle button is detachably connected to the corresponding mount; the bracket is rotationally connected to the support plate, and the flexible body abuts against the board body and is configured to press against the corresponding trigger switch.

In an embodiment, the support plate is formed with through holes and is provided with bosses on a side facing the circuit board; the mounts are inserted in the through holes and are in rotational fit with the bosses; on the side of the support plate that faces the circuit board, each flexible body is provided with an abutting portion protruding from a distal end of the corresponding boss, and the abutting portion abuts against the board body.

In an embodiment, the snap-fit member is a cylindrical metal part; each paddle button includes a press portion and a snap-fit portion which are integrally formed, the press portion protrudes from a side of the support plate that faces away from the circuit board, and the snap-fit portion is inserted in the clamping groove and is cylindrical.

In an embodiment, each press portion is provided with a press post on a side facing the circuit board, and the press post is arranged corresponding to the trigger switch; the corresponding bracket is provided with a positioning groove, and the press post is received in the positioning groove.

A gamepad includes a gamepad body and the paddle button assembly according to any one of the above embodiments, and the paddle button assembly is detachably connected to the gamepad body.

The paddle button assembly described above is applicable to a gamepad. The paddle button assembly includes paddle buttons, mounts and a circuit board. The mounts are engaged with and fixed to the paddle buttons. The circuit board includes a board body and trigger switches arranged on the board body. The board body abuts against the mounts. The paddle buttons are configured to be pressed to drive the mounts to rotate relative to the board body, so that the mounts press against the trigger switches. The paddle buttons are engaged and fixed with the mounts, and the paddle buttons are configured to be pressed to drive the mounts to rotate relative to the board body, so that the mounts press against the trigger switches to generate trigger signals. The mounts are engaged with and fixed to the paddle buttons, thereby ensuring stable mounting of the paddle buttons, preventing easy wobbling of the paddle buttons on the mounts, and reducing the difficulty in machining and assembling parts; and the paddle buttons drive the mounts to press against the trigger switches, thereby ensuring the operation flexibility of the paddle buttons.

### BRIEF DESCRIPTION OF DRAWINGS

In order to more clearly illustrate the technical solutions in the embodiments of the present disclosure or the prior art, the following is a brief introduction to the drawings required for the description of the embodiments or the prior art. Obviously, the drawings described below are merely some embodiments of the present disclosure. For those of ordinary skill in the art, other drawings may be obtained on the basis of these drawings without creative labor.
FIG. 1 is a schematic view of a paddle button assembly according to an embodiment.
FIG. 2 is an exploded view of the paddle button assembly shown in FIG. 1.
FIG. 3 is a schematic view of the paddle button assembly shown in FIG. 1 from another perspective.
FIG. 4 is a schematic view of a mount of the paddle button assembly shown in FIG. 2.
FIG. 5 is a cross-sectional view of the paddle button assembly shown in FIG. 1.

Reference numerals:
paddle button assembly 10, paddle button 100, press portion 110, snap-fit portion 120, press post 130, mount 200, clamping groove 201, protrusion 210, bracket 220, positioning groove 221, snap-fit member 230, flexible body 240, abutting portion 241, circuit board 300, board body 310, trigger switch 320, support plate 400, through hole 401, boss 410, groove 411, limit ledge 420, limit groove 421, press plate 510, fastener 520.

### DETAILED DESCRIPTION OF EMBODIMENTS

For ease of understanding the present disclosure, a more comprehensive description of the present disclosure will be given below with reference to the accompanying drawings. Preferred embodiments of the present disclosure are illustrated in the accompanying drawings. However, the present disclosure may be embodied in many different forms and is not limited to the embodiments described herein. On the contrary, these embodiments are provided so that the disclosure of the present disclosure will be understood more thoroughly and comprehensively.

It should be noted that when an element is referred to as being "fixed to" another element, it can be directly on the other element or intervening elements may also be present. When an element is considered to be "connected to" another element, it can be directly connected to the other element or intervening elements may also be present. The terms "vertical", "horizontal", "left", "right" and similar expressions used herein are for illustrative purposes only.

Unless otherwise defined, all technical and scientific terms used herein have the same meaning as commonly understood by one of ordinary skill in the art to which the present disclosure belongs. The terms used in the specification of the present disclosure herein are for the purpose of describing specific embodiments only and are not intended to limit the present disclosure. As used herein, the term "and/or" includes any and all combinations of one or more of the associated items listed.

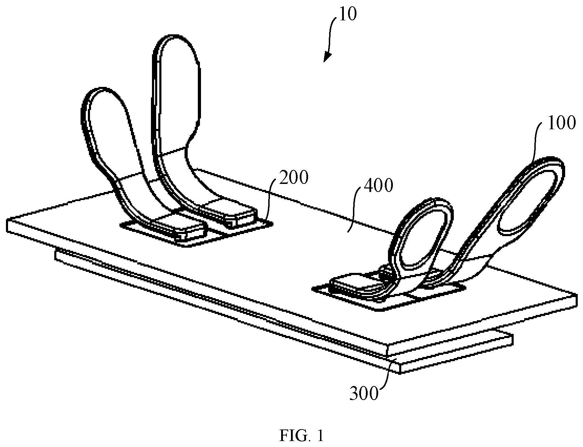

Referring to FIG. 1, the present disclosure discloses a paddle button assembly 10, which is applicable to a gamepad. For example, the paddle button assembly 10 is detachably connected to the back of a gamepad body (not shown) of the gamepad. An operator can operate the paddle button assembly 10 with the middle finger or ring finger, so as to reduce the operating burden of the thumb on the front side of the handle body. That is, by means of the paddle button assembly 10 and components (such as buttons) of the gamepad body, operation flexibility can be improved and the control over virtual characters can be realized. The gamepad body may include structures such as a housing of the gamepad, joysticks, and buttons. In some embodiments, the paddle button assembly 10 may further include a plug connector (not shown). By mating the plug connector with a communication interface of the gamepad body, such as a Type-C interface or a Micro-USB interface, a communication connection between the paddle button assembly 10 and the gamepad body can be realized, thereby facilitating mounting and operation by users.

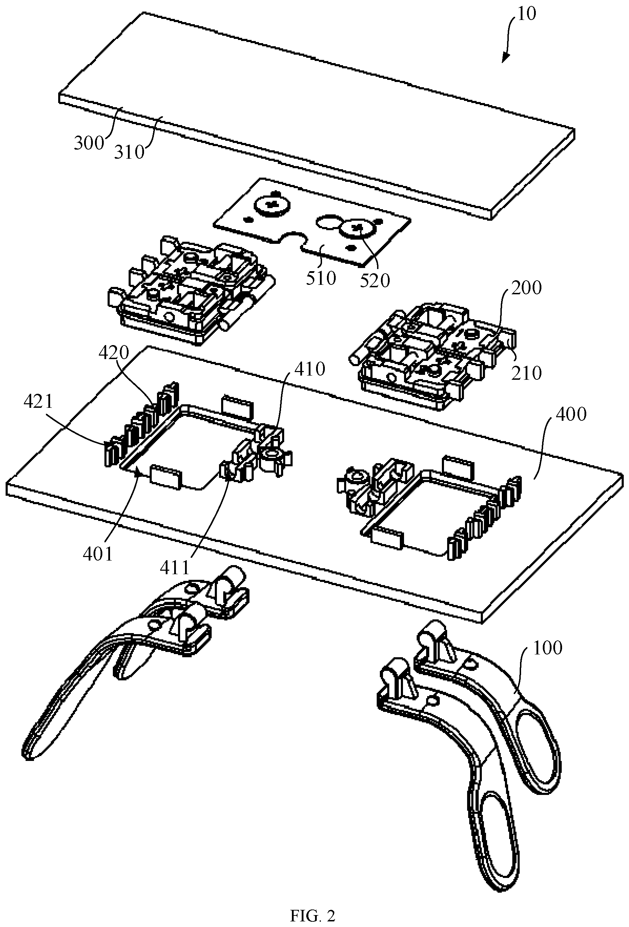

With reference to FIGS. 2, 3 and 4, the paddle button assembly 10 includes paddle buttons 100, mounts 200 and a circuit board 300. Each mount 200 is engaged with and fixed to the corresponding paddle button 100. The cross-section of each mount 200 is larger than that of the corresponding paddle button 100, so that stable support can be provided for the paddle buttons 100 by the mounts 200 when the paddle button assembly 10 is mounted on the gamepad body. The circuit board 300 includes a board body 310 and trigger switches 320 arranged on the board body 310, and the board body 310 abuts against the mounts 200. The paddle buttons 100 are configured to be pressed to drive the mounts 200 to rotate relative to the board body 310, so that the mounts 200 press against the trigger switches 320 to generate trigger signals. In some embodiments, the trigger switches 320 are configured as micro-switches.

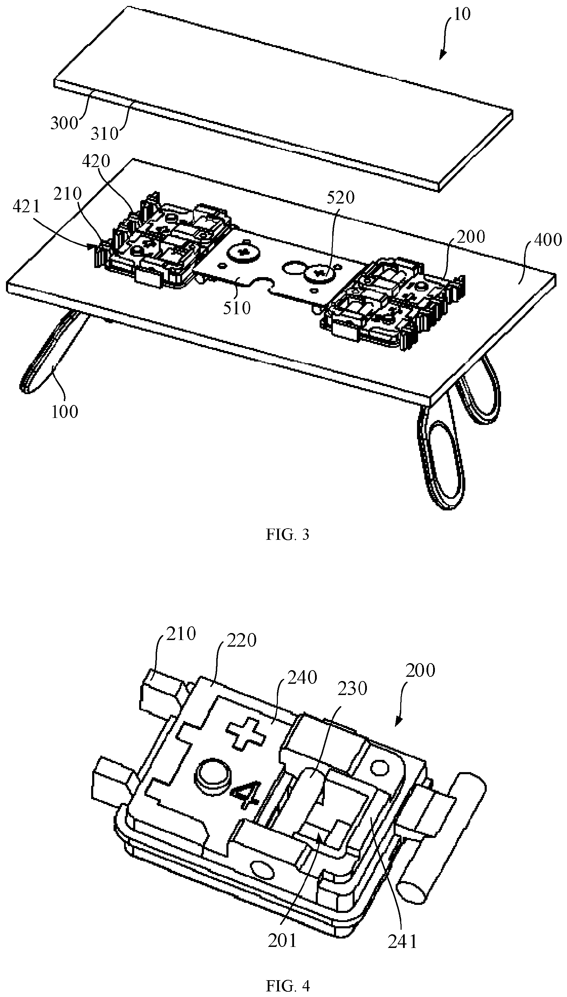

The paddle button assembly 10 may further include a support plate 400, and the mounts 200 are rotationally connected to the support plate 400. In an implementation mode, referring to FIGS. 2 and 3, the support plate 400 is substantially rectangular plate-shaped and is formed with through holes 401. The mounts 200 are inserted in the through holes 401. The support plate 400 is provided with bosses 410 on a side facing the circuit board 300, and each boss 410 is provided with a groove 411 in rotational fit with the corresponding mount 200. The board body 310 is arranged on one side of the support plate 400 and fixed relative to the support plate 400 in position, and the paddle buttons 100 protrude from the opposite other side of the support plate 400. When an operator presses a paddle button 100 with a finger, the mount 200 engaged with and fixed to the paddle button 100 can rotate within the corresponding through hole 401 through the rotational fit between the groove 411 and the mount 200, thereby pressing against the corresponding trigger switch 320 of the circuit board 300 to generate a trigger signal.

The relative positional fixation between the board body 310 and the support plate 400 includes, but is not limited to, threaded connection and adhesive bonding. Of course, the circuit board 300 and the support plate 400 may be respectively fixedly connected to the gamepad body, so as to realize relative positional fixation between the board body 310 and the support plate 400.

The support plate 400 can provide more stable support for mounting of the paddle button assembly 10, and fixing the mounts 200 to the support plate 400 also can reduce assembly difficulty while ensuring assembly accuracy and efficiency. For example, referring to FIG. 2, in some embodiments, the support plate 400 is provided with two through holes 401 which are spaced apart, each through hole 401 receives two paddle buttons 100 and two mounts 200, and the two paddle buttons 100 are connected to the two mounts 200 in a one-to-one correspondence. The paddle button assembly 10 may further include a press plate 510 and fasteners 520. The press plate 510 is configured as a hardware component and covers the grooves 411. The press plate 510 is fixedly connected to the support plate 400 by means of the two fasteners 520. The board body 310 covers the mounts 200 and the press plate 510.

The fasteners 520, including, but not limited to, screws, can reliably fix the press plate 510 to the support plate 400 and improve the convenience of disassembly and maintenance. The arrangement of the press plate 510 covering the grooves 411 can reliably limit the rotation shafts of the mounts 200, prevent the mounts 200 from easily detaching from the support plate 400, and ensure the rotation reliability of the mounts 200 on the support plate 400.

Further, referring to FIG. 2 again, the support plate 400 is provided with limit ledges 420 on the same side as the bosses 410 and opposite to the bosses 410, and each limit ledge 420 is provided with at least two limit grooves 421 which are spaced apart. With reference to FIG. 3, each mount 200 is provided with at least two protrusions 210, and the protrusions 210 are inserted in the limit grooves 421 in a one-to-one correspondence. In the embodiment shown in FIGS. 2 and 3, each boss 410 is located at one end of the corresponding mount 200 and arranged corresponding to the rotation axis of the mount 200, while the limit ledges 420 are located at the opposite other end of the corresponding mount 200, which can also be regarded as the free end of the mount 200. When the operator presses a paddle button 100 to drive the corresponding mount 200 to rotate within the corresponding through hole 401, the protrusions 210 at the free end of the mount 200 can move within the limit grooves 421, so as to guide and limit the rotation of the mount 200 by means of the limit grooves 421, and prevent axial wobbling of the mount 200 during rotation, thereby improving the motion stability of the mount 200.

Further, with reference to FIG. 4, each mount 200 may include a bracket 220, an snap-fit member 230, and a flexible body 240. The protrusions 210 are integrally formed with the bracket 220. The bracket 220 and the snap-fit member 230 are respectively connected to the flexible body 240. The bracket 220 and the snap-fit member 230, together with the flexible body 240, form a clamping groove 201 for clamping the corresponding paddle button 100, so that the paddle button 100 is detachably connected to the mount 200. The bracket 220 is rotationally connected to the support plate 400. The flexible body 240 abuts against the board body 310 and is configured to press against the corresponding trigger switch 320, and the flexible body 240 may be injection-molded on the bracket 220. The paddle buttons 100 are substantially arc-shaped sheets, and are typically made of a metal powder by injection molding and sintering. The bracket 220 may be a hard plastic part, for example, with a hardness higher than Shore hardness 90A, while the flexible body 240 may be a soft rubber part, such as silicone, with a hardness lower than Shore hardness 90A. The snap-fit member 230 may be a cylindrical metal part. The snap-fit member 230 is fixedly connected to the flexible body 240 and forms, together with the bracket 220, the clamping groove 201 for clamping the paddle button 100.

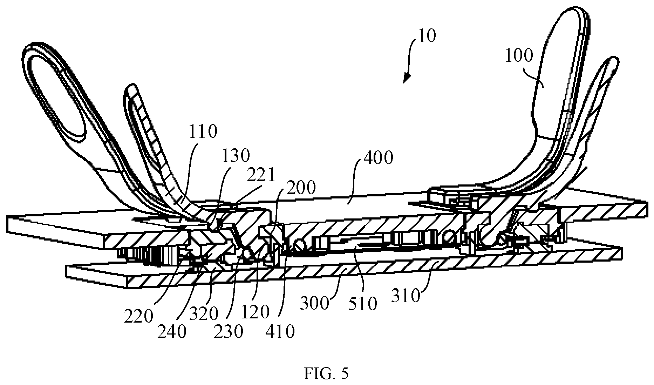

Further, with reference to FIG. 5, each paddle button 100 may include a press portion 110 and a snap-fit portion 120 which are integrally formed. The press portion 110 is substantially arc-shaped and protrudes from the side of the support plate 400 that faces away from the circuit board 300, and the snap-fit portion 120 is inserted in the clamping groove 201 and is cylindrical. During the assembly of each paddle button 100 and the corresponding mount 200, the snap-fit portion 120 can be inserted from the clamping groove 201 to press the snap-fit member 230 and pull, by means of the snap-fit member 230, the flexible body 240 to deform, so that the snap-fit portion 120 passes over the snap-fit member 230 and enters the clamping groove 201. When the snap-fit member 230 recovers its deformation, a pressing force is generated against the snap-fit portion 120, thereby reliably fixing the paddle button 100 in the clamping groove 201 and preventing the paddle button 100 from easily wobbling relative to the mount 200. When a paddle button 100 needs to be replaced, the paddle button 100 is pulled by a user with force, and the snap-fit portion 120 presses the snap-fit member 230 and again pulls, by means of the snap-fit member 230, the flexible body 240 to deform, so that the snap-fit portion 120 can pass over the snap-fit member 230 and disengage from the clamping groove 201, thereby improving the convenience of disassembly and assembly of the paddle button 100.

Each press portion 110 may further be provided with a press post 130 on a side facing the circuit board 300, and the press post 130 is arranged corresponding to the trigger switch 320. The corresponding bracket 220 is provided with a positioning groove 221, and the press post 130 is received in the positioning groove 221. The positioning groove 221 can further limit the corresponding paddle button 100, prevent the pressed paddle button 100 from wobbling, and ensure reliable positioning of the paddle button 100 on the mount 200.

Further, with reference to FIGS. 4 and 5, in some embodiments, on the side of the support plate 400 that faces the circuit board 300, each flexible body 240 may further be provided with an abutting portion 241 protruding from a distal end of the corresponding boss 410, and the abutting portion 241 abuts against the board body 310. In the embodiment shown in FIG. 5, the abutting portion 241 extends with appropriate widths along a length direction and width direction of the circuit board 300, respectively. By means of the abutting portions 241 abutting against the board body 310 of the circuit board 300, the entire mounts 200 and the paddle buttons 100 can be maintained at fixed positions in an unused state. When the user presses a paddle button 100 to rotate the corresponding mount 200, the abutting portion 241 deforms due to the pressing by the board body 310; after the user releases the paddle button 100, the pressed and deformed abutting portion 241 can drive the mount 200 and the paddle button 100 to return during the recovery of its deformation.

The paddle button assembly 10 described above is applicable to a gamepad. The paddle button assembly 10 includes paddle buttons 100, mounts 200 and a circuit board 300. The mounts 200 are engaged with and fixed to the paddle buttons 100. The circuit board 300 includes a board body 310 and trigger switches 320 arranged on the board body 310. The board body 310 abuts against the mounts 200. The paddle buttons 100 are configured to be pressed to drive the mounts 200 to rotate relative to the board body 310, so that the mounts 200 press against the trigger switches 320. The paddle buttons 100 are engaged with and fixed to the mounts 200, and the paddle buttons 100 are configured to be pressed to drive the mounts 200 to rotate relative to the board body 310, so that the mounts 200 press against the trigger switches 320 to generate trigger signals. The mounts 200 are engaged with and fixed to the paddle buttons 100, thereby ensuring stable mounting of the paddle buttons 100, preventing easy wobbling of the paddle buttons 100 on the mounts 200, and reducing the difficulty in machining and assembling parts; and the paddle buttons 100 drive the mounts 200 to press against the trigger switches 320, thereby ensuring the operation flexibility of the paddle buttons 100.

The technical features of the above-described embodiments may be arbitrarily combined. For the brevity of description, all possible combinations of the technical features in the above examples are not described. However, as long as there is no contradiction between the combinations of these technical features, all should be considered as falling within the scope of the description.

The above embodiments only describe several implementation modes of the present disclosure. Although the descriptions are specific and detailed, they shall not be construed as limiting the scope of the present disclosure. It should be noted that those of ordinary skill in the art may also make several variations and improvements without departing from the concept of the present disclosure, and all such variations and improvements shall fall within the scope of the present disclosure. Therefore, the scope of the present disclosure shall be based on the appended claims.

## Claims

1. A paddle button assembly, comprising:
paddle buttons;
mounts which are engaged with and fixed to the paddle buttons; and
a circuit board comprising a board body and trigger switches arranged on the board body, wherein the board body abuts against the mounts; the paddle buttons are configured to be pressed to drive the mounts to rotate relative to the board body, so that the mounts press against the trigger switches.

2. The paddle button assembly according to Claim 1, wherein the paddle button assembly comprises a support plate, the mounts are rotationally connected to the support plate, the board body is arranged on one side of the support plate and fixed relative to the support plate in position, and the paddle buttons protrude from the opposite other side of the support plate.

3. The paddle button assembly according to Claim 2, wherein the support plate is formed with through holes and is provided with bosses on a side facing the circuit board; the mounts are inserted in the through holes, and each boss is provided with a groove in rotational fit with the corresponding mount.

4. The paddle button assembly according to Claim 3, wherein the support plate is provided with limit ledges on the same side as the bosses and opposite to the bosses; each limit ledge is provided with at least two limit grooves which are spaced apart; each mount is provided with at least two protrusions, and the protrusions are inserted in the limit grooves in a one-to-one correspondence.

5. The paddle button assembly according to Claim 3, wherein the support plate is provided with two said through holes which are spaced apart; each through hole receives two said paddle buttons and two said mounts, and the two paddle buttons are connected to the two mounts in a one-to-one correspondence; the paddle button assembly comprises a press plate and fasteners; the press plate covers the grooves and is fixedly connected to the support plate by means of the fasteners, and the board body covers the mounts and the press plate.

6. The paddle button assembly according to Claim 2, wherein each mount comprises a bracket, a snap-fit member and a flexible body; the bracket and the snap-fit member are respectively connected to the flexible body; the bracket and the snap-fit member, together with the flexible body, form a clamping groove for clamping the corresponding paddle button, so that the paddle button is detachably connected to the corresponding mount; the bracket is rotationally connected to the support plate, and the flexible body abuts against the board body and is configured to press against the corresponding trigger switch.

7. The paddle button assembly according to Claim 6, wherein the support plate is formed with through holes and is provided with bosses on a side facing the circuit board; the mounts are inserted in the through holes and are in rotational fit with the bosses; on the side of the support plate that faces the circuit board, each flexible body is provided with an abutting portion protruding from a distal end of the corresponding boss, and the abutting portion abuts against the board body.

8. The paddle button assembly according to Claim 6, wherein the snap-fit member is a cylindrical metal part; each paddle button comprises a press portion and a snap-fit portion which are integrally formed, the press portion protrudes from a side of the support plate that faces away from the circuit board, and the snap-fit portion is inserted in the clamping groove and is cylindrical.

9. The paddle button assembly according to Claim 8, wherein each press portion is provided with a press post on a side facing the circuit board, and the press post is arranged corresponding to the trigger switch; the corresponding bracket is provided with a positioning groove, and the press post is received in the positioning groove.

10. A gamepad, comprising a gamepad body and the paddle button assembly according to any one of Claims 1 to 9, wherein the paddle button assembly is detachably connected to the gamepad body.
